# FASCICULE DE BREVET EUROPEEN

(11) **EP 1 602 808 B1**
(45) Date de publication et mention de la délivrance du brevet: **21.03.2007**
(21) Numéro de dépôt: 05300452.9
(22) Date de dépôt: 03.06.2005
(51) Int. Cl.: F01P 3/18

(54) **Dispositif de montage d'une façade avant d'un véhicule automobile equipée notamment d'un refroidisseur d'air de suralimentation**
Mounting device of a motor vehicle's front end equipped with a supercharged air cooler
Montageanordnung einer mit einem Ladeluftkühler ausgerüsteten Vorderfront eines Kraftfahrzeugs

(30) Priorité: 04.06.2004 FR 0406063
(43) Date de publication de la demande: 07.12.2005
(73) Titulaire: Peugeot Citroen Automobiles SA, 78943 Vélizy-Villacoublay Cedex (FR)
(72) Inventeur: Mounier, James, 78870, Bailly (FR)

(56) Documents cités:
- DE-A- 10 347 136
- US-A1- 2003 079 858
- US-A1- 2003 146 030

## Description

La présente invention concerne un procédé de montage d'une façade avant à la caisse d'un véhicule, notamment d'un véhicule équipé d'un moteur diesel suralimenté.

Actuellement, les façades avant, qui sont équipées du matériel de refroidissement pour les moteurs diesel suralimentés et comprenant le radiateur, le condenseur et le refroidisseur d'air de suralimentation, arrivent avec leur équipement à la chaîne de montage pour être assemblées à la caisse du véhicule.

A cet effet, la façade avant est positionnée à sa partie basse ou inférieure sur la caisse du véhicule et est fixée à sa partie haute à la caisse par tout moyen approprié, tel que par exemple des vis de fixation.

Cependant, une fois la façade avant montée sur la caisse du véhicule, le raccordement entre d'une part le refroidisseur d'air de suralimentation et d'autre part la tubulure de sortie du compresseur d'air et une tubulure du collecteur d'admission du moteur pose de grandes difficultés à cause du peu d'espace qui subsiste entre la façade avant et le moteur du véhicule. Un tel raccordement nécessite une grande habileté manuelle de la part de l'opérateur et ralentit considérablement le temps de montage des deux tuyaux de raccordement et par conséquent de la façade avant.

De DE-A-103 47136, il est connu un ensemble de deux éléments de refroidissement montés l'un derrière l'autre dont l'un est un refroidisseur d'air de suralimentation et l'autre le radiateur de refroidissement du moteur. Pour faciliter le nettoyage de chacun de ces éléments, un mécanisme d'articulation est prévu à leur partie inférieure permettant de les basculer vers l'avant, ce qui permet d'accéder successivement à toutes leurs faces. Un tel dispositif est monté selon un procédé avec les caractéristiques du préambule de la revendication 1.

La présente invention a pour but d'éliminer les inconvénients ci-dessus en proposant un dispositif facilitant le montage d'une façade avant à la caisse d'un véhicule automobile notamment d'un véhicule à moteur diesel suralimenté.

Ce but est atteint selon l'invention par un procédé de montage d'une façade avant à la caisse d'un véhicule, notamment d'un véhicule à moteur diesel suralimenté, la façade avant étant équipée d'éléments de refroidissement comprenant notamment un refroidisseur d'air de suralimentation fixé à la façade et auquel sont préalablement montés les deux tuyaux permettant de raccorder le refroidisseur en sortie du compresseur d'air et au collecteur d'admission du moteur, la façade avant étant montée pivotante à sa partie inférieure à la caisse du véhicule suivant un axe sensiblement horizontal et est maintenue à une position inclinée relativement à la caisse telle que sa partie supérieure soit éloignée du moteur avant d'être fixée à la caisse à une position sensiblement verticale, et le refroidisseur ayant sa partie inférieure montée pivotante à la façade suivant un axe sensiblement horizontal et est amoviblement fixé au niveau de sa partie supérieure à la façade par un moyen de verrouillage manuellement déverrouillable pour permettre le basculement du refroidisseur relativement à la façade occupant sa position relative inclinée et de le rapprocher librement du moteur de manière à permettre manuellement le raccordement des tuyaux au compresseur et au collecteur d'admission. Selon l'invention, une fois les tuyaux du refroidisseur raccordés, la façade est basculée vers le moteur relativement au refroidisseur pour lui permettre d'être fixée par son moyen de verrouillage à la caisse du véhicule à sa position verticale et le refroidisseur est automatiquement verrouillé à la façade par le moyen de verrouillage lorsque cette dernière est amenée à sa position verticale.

Le moyen de verrouillage comprend un tenon solidaire de la partie supérieure du refroidisseur et pouvant être logé dans une cavité de la façade, le tenon comportant deux pattes latérales à ergots de verrouillage s'engageant élastiquement respectivement dans deux fenêtres opposées des parois latérales de la cavité pour retenir le tenon dans cette dernière.

Les deux ergots des pattes de verrouillage du tenon dans la cavité sont accessibles de l'extérieur en avant de la façade à l'aide d'un outil à pince dont les deux branches peuvent agir sur les ergots et les pattes pour les rapprocher élastiquement les uns des autres et les désengager de leurs fenêtres respectives.

Les extrémités des branches de la pince peuvent s'engager respectivement dans deux passages conjugués de la façade situés de part et d'autre des fenêtres à travers lesquelles sont accessibles les ergots des pattes de verrouillage, de manière à positionner les extrémités de ces branches directement en regard des ergots de verrouillage lors de l'introduction de ces extrémités dans les deux passages.

La façade avant est maintenue à la position relative inclinée par deux pattes latérales fixées temporairement à la caisse du véhicule et dont chaque extrémité est recourbée à angle droit de manière à retenir la façade au niveau de sa partie supérieure.

Les pattes de retenue comportent des rampes coopérant avec la partie supérieure de la façade pour guider la façade à sa position verticale de fixation à la caisse du véhicule.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue de face externe d'une façade avant fixée à la caisse d'un véhicule à moteur diesel suralimenté ;
- la figure 2 est une vue en perspective représentant le refroidisseur d'air de suralimentation partiellement désolidarisé de la façade pour permettre son raccordement au moteur ;
- la figure 3 est une vue en perspective semblable à celle de la figure 2 et représentant le refroidisseur d'air de suralimentation raccordé au moteur avant d'être solidarisé à la façade ;
- la figure 4 est une vue en perspective du refroidisseur d'air de suralimentation et représentant la manière dont il est articulé en partie inférieure à la façade avant ;
- la figure 5 est une vue en perspective arrière de la façade et représentant le logement du refroidisseur d'air de suralimentation à laquelle il est verrouillé ;
- la figure 6 est une vue en perspective agrandie représentant le moyen de verrouillage du refroidisseur d'air de suralimentation à la façade ; et
- la figure 7 est une vue en perspective représentant une pince permettant de déverrouiller le refroidisseur d'air de suralimentation de la façade avant.

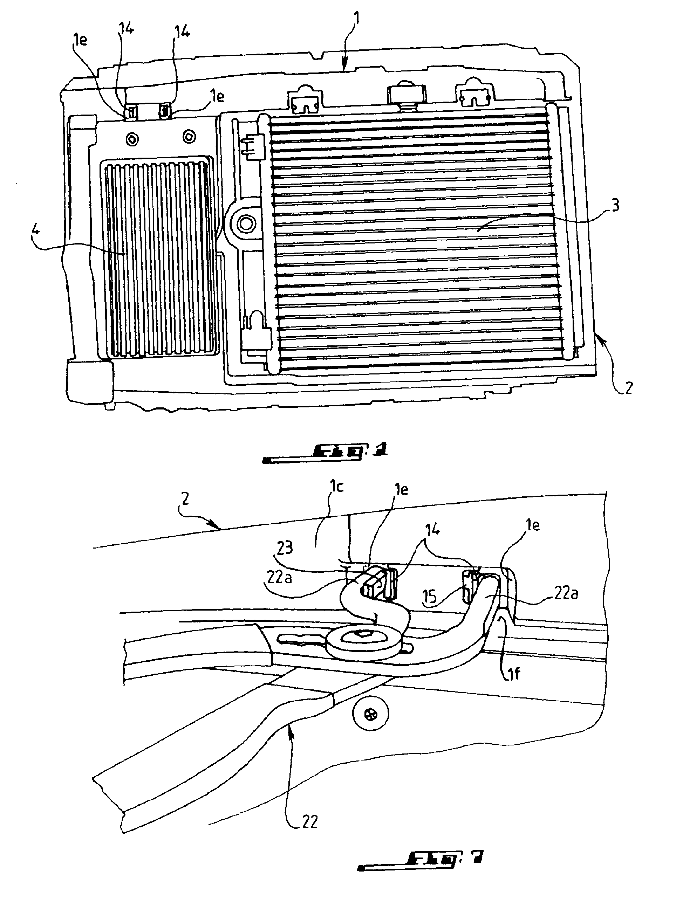

En se reportant aux figures, notamment à la figure 1, la référence 1 désigne une façade avant fixée à la caisse 2 d'un véhicule à moteur diesel suralimenté en occupant une position sensiblement verticale.

La façade avant 1 est équipée des éléments de refroidissement comprenant le radiateur 3, le condenseur de climatisation, non représenté, et le refroidisseur d'air de suralimentation 4, ces éléments étant fixés à la façade 1 avant que celle-ci soit elle-même fixée à la caisse 2 du véhicule sur la chaîne de montage.

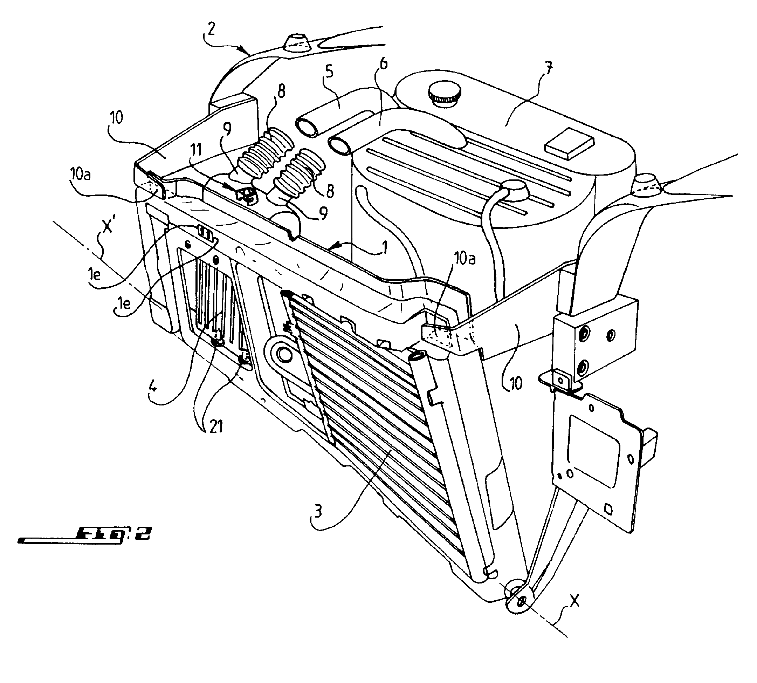

Lorsque la façade avant 1 est fixée à la caisse 2, le refroidisseur d'air de suralimentation 4 est raccordé à une tubulure 5 de sortie du compresseur d'air et à une tubulure 6 de raccordement au collecteur d'admission du moteur 7 par l'intermédiaire respectivement de deux tuyaux de raccordement 8 réalisés en une matière plastique et pouvant être constitués par des soufflets comme représenté en figure 2, étant bien entendu qu'ils peuvent être tout simplement de forme cylindrique d'aspect extérieur lisse et plus ou moins souples. Les deux tuyaux de raccordement 8 sont de préférence préalablement raccordés à leurs tubulures respectives 9 du refroidisseur 4 avant son branchement au moteur 7. Ce refroidisseur permet de refroidir l'air d'admission à la sortie du compresseur avant de pénétrer dans le moteur.

Selon l'invention, la façade avant 1 est montée pivotante à sa partie inférieure à la caisse 2 du véhicule autour d'un axe sensiblement horizontal X-X' et peut être fixée à la caisse 2 à sa position verticale par des moyens de fixation, non représentés, constitués par exemple par des vis solidarisant la partie supérieure de la façade 1 à la caisse 2.

Pour permettre le raccordement en toute facilité du refroidisseur 4 au moteur 7 par l'intermédiaire des tuyaux 8, l'ensemble constitué par la façade 1 et notamment le refroidisseur solidaire de celle-ci est tout d'abord maintenu relativement à la caisse 2 du véhicule à une position inclinée autour de l'axe X-X' telle que la partie supérieure de la façade 1 soit éloignée du moteur 7 avant d'être fixé ensuite à la caisse 2 à la position sensiblement verticale.

A cet effet, les moyens de maintien comprennent deux pattes latérales 10 fixées temporairement, par tout moyen approprié, à la caisse 2 du véhicule parallèlement à l'axe longitudinal de celui-ci et dont chaque extrémité 10a est recourbée sensiblement à angle droit de manière que la partie supérieure de la façade 1 puisse venir en appui sur les faces internes dirigées vers le moteur 7 de ces extrémités recourbées.

En outre, le refroidisseur 4 a sa partie inférieure montée pivotante dans la façade 1 suivant un axe sensiblement horizontal et est amoviblement fixé au niveau de sa partie supérieure par un moyen de verrouillage 11 manuellement déverrouillable pour permettre le basculement du refroidisseur 4 relativement à la façade 1 occupant sa position relative inclinée et de rapprocher librement le refroidisseur 4 du moteur 7 de manière à permettre le raccordement manuel des tuyaux 8 aux tubulures 5, 6.

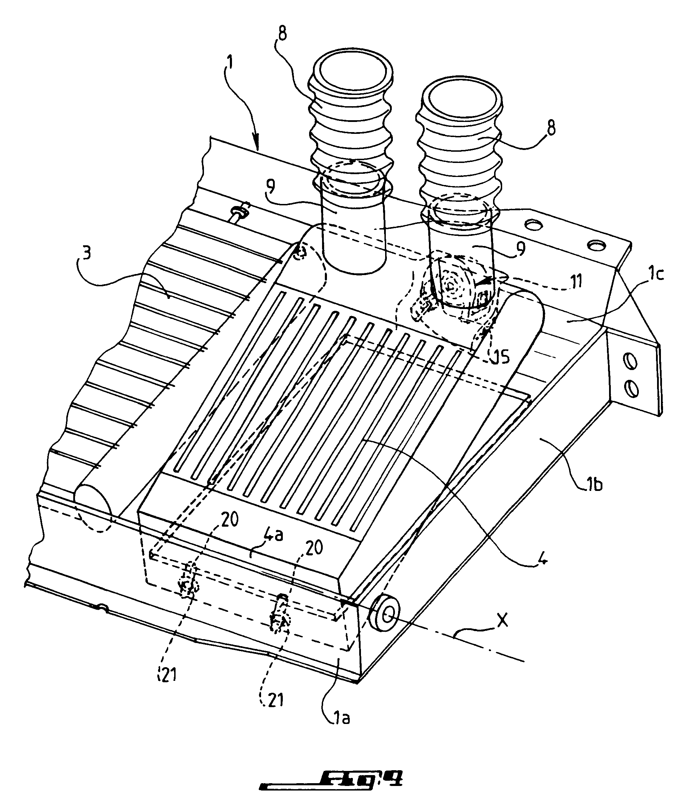

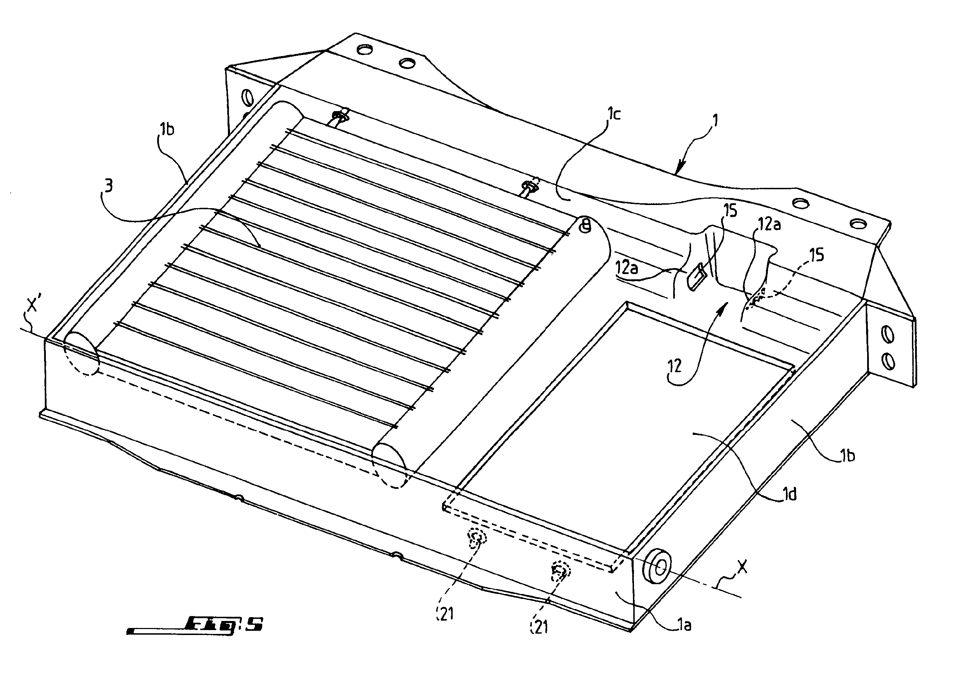

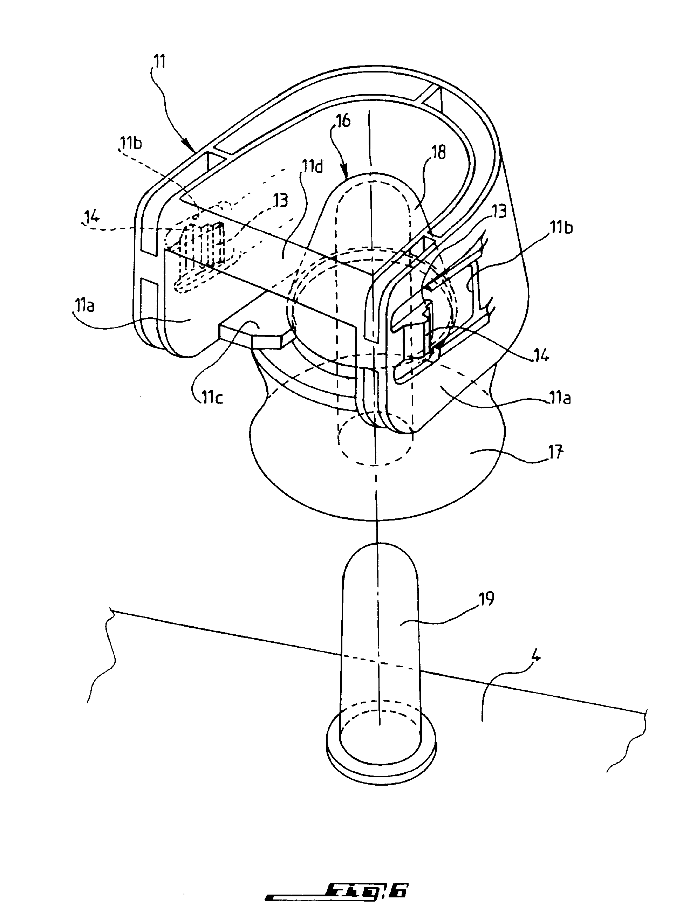

Le moyen de verrouillage 11, mieux visible en figure 6, comprend un genre de tenon ou bride présentant une forme générale en U horizontal solidaire de la partie supérieure du refroidisseur 4, le tenon 11 pouvant être logé dans une cavité 12 de la façade 1 pour y être verrouillé. Le tenon 11 comporte deux pattes latérales 13 réalisées dans les deux branches parallèles 11a de ce tenon et comportant respectivement deux ergots externes 14 pouvant s'encliqueter élastiquement dans deux fenêtres opposées 15 réalisées au travers des parois latérales 12a de la cavité 12 pour retenir le tenon 11 dans cette cavité et, par conséquent, verrouiller la partie supérieure du refroidisseur 4 dans la façade 1.

Les deux pattes 13 à ergots de verrouillage 14 sont logées dans deux fenêtres 11b réalisées respectivement dans les deux branches 11a du tenon 11, et ont leurs extrémités libres dirigées vers le moteur en étant raccordées à deux bords verticaux des fenêtres 11b par leurs extrémités opposées de manière à permettre la déformation élastique de chaque patte 13 suivant l'extrémité de raccordement dans un sens rapprochant ou éloignant l'une de l'autre ces pattes.

Le tenon 11 comprend, solidaire de sa paroi de fond 11c logée en partie inférieure de ce tenon entre les branches 11a, un manchon 16 en matériau élastomère comportant une embase généralement annulaire 17 surmontée d'une coiffe sensiblement tronconique 18 et dans lequel peut s'engager à force un doigt 19 solidaire de la paroi supérieure du refroidisseur 4 pour solidariser le tenon à ce dernier de manière que les deux branches 11a soient sensiblement parallèles à la direction longitudinale du véhicule.

L'ensemble du tenon 11, hormis bien entendu le manchon 16, est réalisé en une matière plastique rigide obtenue par moulage et peut comporter une petite barre transversale supérieure 11d interposée entre les deux branches 11a pour empêcher leur rapprochement l'une de l'autre lors du verrouillage du tenon 11 dans la cavité 12 correspondante de la façade 1.

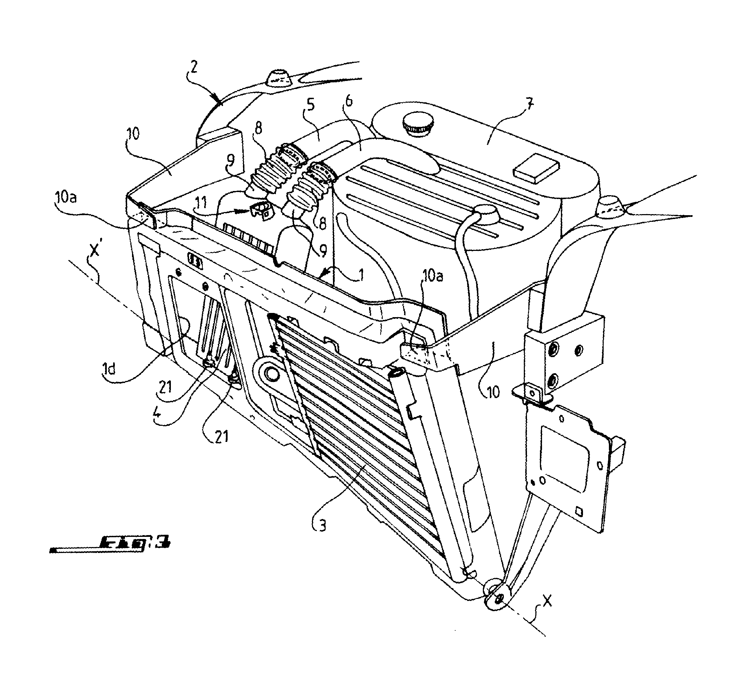

Le refroidisseur d'air de suralimentation 4 a sa partie inférieure montée pivotante à la façade avant 1 suivant un axe sensiblement horizontal. A cet effet et comme cela ressort mieux des figures 4 et 5, la paroi de fond 4a du refroidisseur 4 est pourvue de deux doigts externes 20 solidaires perpendiculairement de cette paroi et qui sont engagés respectivement dans deux manchons en matériau élastomère 21 fixés dans la paroi de fond 1a de la façade avant 1 s'étendant transversalement à l'axe longitudinal du véhicule de manière à permettre aux doigts 20 de s'articuler suivant l'axe X-X' par déformation des manchons 21 qui peuvent être identiques au manchon 16 du tenon 11.

La façade avant 1 peut présenter la forme générale d'un caisson sensiblement parallèlépipédique délimité par la paroi 1a, les parois latérales 1b et la paroi supérieure 1c en étant complètement ouvert en regard du moteur 7 pour permettre le logement dans la façade 1 des éléments de refroidissement. La façade 1 comporte en outre des fenêtres réalisées dans sa paroi opposée au moteur 7 pour permettre aux éléments de refroidissement d'être en contact avec l'air ambiant, seule la fenêtre 1d du refroidisseur 4 étant visible. La figure 5 montre que les deux fenêtres de verrouillage 15 du tenon 11 sont réalisées à proximité de la paroi supérieure 1c de la façade avant 1.

Le procédé de montage de la façade 1 et de raccordement du refroidisseur 4 au moteur 7 va maintenant être décrit.

Après positionnement du véhicule sur la ligne de montage, la façade avant 1 est montée articulée à sa partie inférieure à la caisse du véhicule de manière à pouvoir pivoter autour de l'axe X-X' et sa partie supérieure est amenée en appui sur les extrémités recourbées 10a des pattes latérales de retenue 10 préalablement assemblées à la caisse 2, de manière à maintenir la façade 1 à une position inclinée, par exemple d'environ 20 degrés, et éloignée du moteur 7. A cette position, le refroidisseur 4 est verrouillé dans la façade 1 et les tuyaux de raccordement 8 sont préalablement montés sur leurs tubulures respectives 9 de ce refroidisseur.

Un opérateur intervient alors pour déverrouiller le tenon 11 du refroidisseur 4 de la façade 1 à l'aide d'une pince 22 visible à la figure 7 et dont les branches d'extrémité 22a permettent d'agir sur les ergots 14 des pattes 13 pour les rapprocher l'un de l'autre par déformation élastique de ces pattes et, par conséquent, déverrouiller le tenon 11 de la façade 1.

Le refroidisseur 4 peut alors basculer librement relativement à la façade immobile 1 autour de ses éléments d'articulation 20, 21 pour permettre à la partie supérieure du refroidisseur 4 d'être rapprochée du moteur 7 à une position à laquelle l'opérateur peut aisément emmancher les deux tubulures 5, 6 dans leurs tuyaux de raccordement respectifs 8.

Une fois ce raccordement effectué, l'opérateur fait pivoter la partie supérieure de la façade 1 autour de l'axe X-X' vers le moteur 7 jusqu'à ce que le tenon 11 se verrouille automatiquement par encliquetage dans la cavité 12 par l'intermédiaire des ergots 14 s'engageant respectivement dans les deux fenêtres de retenue 15.

L'opérateur peut alors fixer définitivement la façade avant 1 à la caisse 2 du véhicule à l'aide de vis de fixation bloquant la partie supérieure de cette façade à la caisse. Les pattes 10 peuvent alors être retirées de la caisse 2.

Ainsi, en déverrouillant la partie supérieure du refroidisseur 4 de la façade 1, celui-ci a une liberté de mouvement permettant à l'opérateur de brancher aisément les tuyaux de raccordement aux tubulures correspondantes 5, 6.

Les pattes de retenue 10 peuvent comporter des rampes, non représentées, pouvant coopérer avec la partie supérieure de la façade 1 pour guider cette dernière à sa position verticale de fixation à la caisse 2 du véhicule une fois le refroidisseur 4 raccordé au moteur 7.

Les deux branches de la pince 22 ont leurs extrémités à section transversale sensiblement carrée permettant leur introduction respectivement dans deux passages conjugués 1e de la façade 1 situés de part et d'autre des fenêtres 15 à travers lesquelles sont accessibles les ergots de verrouillage 14 pour permettre à ces extrémités de les rapprocher l'un de l'autre lors d'une opération de déverrouillage du radiateur 4 de la façade 1. Les passages conjugués 1e de la façade 1 permettent le positionnement automatique et direct des branches d'extrémité 22a de la pince 22 en regard des ergots de verrouillage 14 lors de l'opération de déverrouillage du tenon 11 de la façade 1.

Plus précisément, dans le mode de réalisation préféré, les branches d'extrémité 22a de la pince comportent d'une part des pattes telles que 23 aptes à coopérer avec les ergots 14 et d'autre part des pattes (non représentées) aptes à prendre appui sur le fond 1f des passages 1e, les dimensions étant telles que les pattes 23 soient en face des ergots 14 lorsque les autres pattes sont en appui sur le fond 1e.

L'invention permet à un opérateur de raccorder facilement le refroidisseur d'air de suralimentation au moteur par l'intermédiaire des tuyaux de raccordement pouvant être emmanchés librement sur leurs tubulures respectives du moteur et du compresseur.

D'autre part, si la description ci-dessus a été faite dans le cadre d'un véhicule à moteur diesel suralimenté où il est nécessaire de basculer le refroidisseur d'air de suralimentation, il est bien entendu que l'invention s'applique à tout type de véhicule dans lequel il est nécessaire de basculer un élément de façade avant lors des opérations de montage.

## Revendications

1. Procédé de montage d'une façade avant (1) à la caisse (2) d'un véhicule, notamment d'un véhicule à moteur diesel suralimenté, la façade avant (1) étant équipée d'éléments de refroidissement comprenant notamment un refroidisseur d'air de suralimentation (4) fixé à la façade (1) et auquel sont préalablement montés les deux tuyaux (8) permettant de raccorder le refroidisseur (4) en sortie du compresseur d'air et au collecteur d'admission du moteur, la façade avant (1) étant montée pivotante à sa partie inférieure à la caisse (2) du véhicule suivant un axe sensiblement horizontal et est maintenue à une position inclinée relativement à la caisse (2) telle que sa partie supérieure soit éloignée du moteur (7) avant d'être fixée à la caisse (2) à une position sensiblement verticale, et le refroidisseur (4) ayant sa partie inférieure montée pivotante à la façade (1) suivant un axe sensiblement horizontal et est amoviblement fixé au niveau de sa partie supérieure à la façade (1) par un moyen de verrouillage (11) manuellement déverrouillable pour permettre le basculement du refroidisseur (4) relativement à la façade (1) occupant sa position relative inclinée et de le rapprocher librement du moteur (7) de manière à permettre manuellement le raccordement des tuyaux (8) au compresseur et au collecteur d'admission **caractérisé en ce que**, une fois les tuyaux (8) du refroidisseur (4) raccordés, la façade (1) est basculée vers le moteur (7) relativement au refroidisseur (4) pour lui permettre d'être fixée par son moyen de verrouillage à la caisse (2) du véhicule à sa position verticale et le refroidisseur (4) est automatiquement verrouillé à la façade (1) par le moyen de verrouillage (11) lorsque cette dernière est amenée à sa position verticale.

2. Procédé selon la revendication 1, **caractérisé en ce que** le moyen de verrouillage comprenant un tenon (11) solidaire de la partie supérieure du refroidisseur (4), le tenon (11) est logé dans une cavité (12) de la façade (1), le tenon (11) comportant deux pattes latérales (13) à ergots de verrouillage (14) engagés élastiquement respectivement dans deux fenêtres opposées (15) des parois latérales (12a) de la cavité (12) pour retenir le tenon (11) dans cette dernière.

3. Procédé selon la revendication 2, **caractérisé en ce que** au moins les ergots (14) des deux pattes de verrouillage (13) du tenon (11) dans la cavité (12) étant accessibles de l'extérieur en avant de la façade (1), les ergots (14) et les pattes (13) sont rapprochés élastiquement les uns des autres avec un outil à pince (22) dont les branches peuvent agir sur les ergots (14) et les pattes (13) et les ergots (14) sont désengager de leurs fenêtres respectives (15).

4. Procédé selon la revendication 3, **caractérisé en ce que** l'on positionne les extrémités (22a) des branches de la pince (22) directement en regard des ergots (14) lors de l'introduction de ces extrémités dans deux passages conjugués (1e) de la façade (1) situés de part et d'autre des fenêtres (15) à travers lesquelles les ergots (14) sont accessibles.

5. Procédé selon l'une des revendications précédentes, **caractérisé en ce que** la façade (1) est maintenue à la position relative inclinée par deux pattes latérales (10) fixées temporairement à la caisse (2) du véhicule et dont chaque extrémité (10a) est recourbée à angle droit de manière à retenir la façade (1) au niveau de sa partie supérieure.

6. Procédé selon la revendication 5, **caractérisé en ce que** la façade (1) est guidée dans sa position verticale de fixation à la caisse (2) du véhicule par les pattes de retenue (10) comportent des rampes coopérant avec la partie supérieure de la façade (1).

## Claims

1. Method for mounting a front face (1) on the body (2) of a vehicle, in particular a vehicle with a supercharged diesel engine, the front face (1) being equipped with cooling elements comprising in particular a charge air cooler (4) fixed to the front face (1) and on which the two pipes (8) are mounted beforehand, allowing the cooler (4) to be connected at the outlet of the air compressor and to the intake manifold of the engine, the front face (1) being mounted so as to pivot in its lower part on the body (2) of the vehicle along a substantially horizontal axis and is held in a position that is tilted relative to the body (2) such that its upper part is at a distance from the engine (7) before being fixed to the body (2) in a substantially vertical position, and the cooler (4) having its lower part mounted so as to pivot on the front face (1) along a substantially horizontal axis and is fixed removably in its upper part to the front face (1) by a manually unlockable locking means (11) in order to allow the cooler (4) to tilt relative to the front face (1) occupying its tilted relative position and to bring it freely closer to the engine (7) so as to permit the manual connection of the pipes (8) to the compressor and to the intake manifold, **characterised in that**, once the pipes (8) of the cooler (4) are connected, the front face (1) is rocked towards the engine (7) relative to the cooler (4) in order to allow it to be fixed by its locking means to the body (2) of the vehicle in its vertical position and the cooler (4) is automatically locked to the front face (1) by the locking means (11) when the latter is brought to its vertical position.

2. Method according to Claim 1, **characterised in that**, the locking means comprising a stud (11) integral with the upper part of the cooler (4), the stud is housed in a cavity (12) on the front face (1), the stud (11) comprising two side tabs (13) with locking spurs (14) engaged elastically respectively in two opposite windows (15) in the side walls (12a) of the cavity (12) in order to hold the stud (11) in the latter.

3. Method according to Claim 2, **characterised in that** since at least the spurs (14) of the two tabs (13) for locking the stud (11) in the cavity (12) are accessible from outside in front of the front face (1), the spurs (14) and the tabs (13) are brought elastically closer to one another with a clamp tool (22), the branches of which can act on the spurs (14) and the tabs (13) and the spurs (14) are disengaged from their respective windows (15).

4. Method according to Claim 3, **characterised in that** the ends (22a) of the branches of the clamp (22) are positioned directly opposite the spurs (14) when these ends are introduced into the two combined passages (1 e) of the front face (1) located on either side of the windows (15) through which the spurs (14) are accessible.

5. Method according to one of the preceding claims, **characterised in that** the front face (1) is held in the tilted relative position by two side tabs (10) fixed temporarily to the body (2) of the vehicle and each end (10a) of which is bent at a right angle so as to hold the front face (1) in its upper part.

6. Method according to Claim 5, **characterised in that** the front face (1) is guided into its vertical position of fixing to the body (2) of the vehicle by the holding tabs (10) comprise slopes co-operating with the upper part of the front face (1).

## Patentansprüche

1. Verfahren zur Montage einer Vorderfront (1) an der Karosserie (2) eines Fahrzeugs, insbesondere eines Fahrzeugs mit Dieselmotor mit Aufladung, wobei die Vorderfront (1) mit Kühlelementen versehen ist, die insbesondere einen Ladeluftkühler (4) umfassen, der an der Vorderfront (1) befestigt ist und an dem vorher die beiden Schläuche (8) montiert wurden, die es ermöglichen, den Kühler (4) mit dem Ausgang des Luftkompressors und mit dem Ansaugkrümmer des Motors zu verbinden, wobei die Vorderfront (1) in ihrem unteren Abschnitt um eine im Wesentlichen horizontale Achse verschwenkbar an der Karosserie (2) des Fahrzeugs montiert ist und in einer zur Karosserie (2) geneigten Position gehalten wird, sodass ihr oberer Abschnitt vom Motor (7) weggerückt ist, bevor er in einer im Wesentlichen vertikalen Position an der Karosserie (2) befestigt wird, und wobei der Kühler (4) in seinem unteren Abschnitt um eine im Wesentlichen horizontale Achse verschwenkbar an der Vorderfront (1) montiert und an seinem oberen Abschnitt an der Vorderfront (1) durch ein Verriegelungsmittel (11) abnehmbar befestigt ist, das sich manuell entriegeln lässt, was ermöglicht, den Kühler (4) gegenüber der Vorderfront (1), die sich in ihrer geneigten Position befindet, zu kippen und ihn frei an den Motor (7) zu rücken, sodass die Schläuche (8) manuell mit dem Kompressor und dem Ansaugkrümmer verbunden werden können, **dadurch gekennzeichnet, dass** nach dem Verbinden der Schläuche (8) des Kühlers (4) die Vorderfront (1) gegenüber dem Kühler (4) zum Motor (7) gekippt wird, sodass sie von ihrem Verriegelungsmittel an der Karosserie (2) des Fahrzeugs in ihrer vertikalen Position befestigt werden kann, wobei der Kühler (4) automatisch vom Verriegelungsmittel (11) an der Vorderfront (1) verriegelt wird, wenn diese in ihre vertikale Position geführt wird.

2. Verfahren nach Anspruch 1, **dadurch gekennzeichnet, dass** das Verriegelungsmittel einen mit dem oberen Abschnitt des Kühlers (4) fest verbundenen Zapfen (11) aufweist, der in einer Aushöhlung (12) der Vorderfront (1) angeordnet ist, wobei der Zapfen (11) zwei seitliche Lappen (13) mit Verriegelungsnocken (14) aufweist, die elastisch in zwei gegenüberliegende (15) Öffnungen der Seitenwände (12a) der Aushöhlung (12) eingeführt werden, um den Zapfen (11) in dieser zu halten.

3. Verfahren nach Anspruch 2, **dadurch gekennzeichnet, dass** zumindest die Nocken (14) der beiden Verriegelungslappen (13) des Zapfens (11) in der Aushöhlung (12) vorne an der Vorderfront (1) von außen zugänglich sind, wobei die Nocken (14) und die Lappen (13) einander elastisch mit einem Werkzeug mit Zange (22) angenähert werden, deren Arme auf die Nocken (14) und die Lappen (13) wirken und die Nocken (14) aus ihren jeweiligen **Öffnungen (15) lösen können.**

4. Verfahren nach Anspruch 3, **dadurch gekennzeichnet, dass** die Enden (22a) der Arme der Zange (22) direkt gegenüber den Nocken (14) positioniert werden, wenn sie in die beiden zugeordneten Durchgänge (le) der Vorderfront (1) eingeführt werden, die sich auf beiden Seiten der Öffnungen (15) befinden, über die die Nocken (14) zugänglich sind.

5. Verfahren nach einem der vorhergehenden Ansprüche, **dadurch gekennzeichnet, dass** die Vorderfront (1) in der geneigten Position von zwei seitlichen Lappen (10) gehalten wird, die vorübergehend an der Karosserie (2) des Fahrzeugs befestigt werden und deren Enden (10a) im rechten Winkel derart umgebogen sind, dass die Vorderfront (1) an ihrem oberen Abschnitt gehalten wird.

6. Verfahren nach Anspruch 5, **dadurch gekennzeichnet, dass** die Vorderfront (1) in ihre vertikale Position der Befestigung an der Karosserie (2) des Fahrzeugs von Haltelappen (10) geführt wird, die Rampen aufweisen, welche mit dem oberen Abschnitt der Vorderfront (1) zusammenwirken.
